# EUROPÄISCHE PATENTSCHRIFT

(11) **EP 3 698 109 B1**
(45) Veröffentlichungstag und Bekanntmachung des Hinweises auf die Patenterteilung: **20.07.2022**
(21) Anmeldenummer: 18778916.9
(22) Anmeldetag: 27.09.2018
(51) Int. Cl.: B65B 3/30, G01F 13/00, G01F 15/00, B65B 3/34

(54) **VERFAHREN UND VORRICHTUNG ZUR DURCHFÜHRUNG EINES ABFÜLLPROZESSES**
METHOD AND APPARATUS FOR CARRYING OUT A FILLING PROCESS
PROCÉDÉ ET DISPOSITIF D'EXÉCUTION D'UN PROCESSUS DE REMPLISSAGE

(30) Priorität: 20.10.2017 DE 102017124565
(43) Veröffentlichungstag der Anmeldung: 26.08.2020
(73) Patentinhaber: Endress+Hauser Flowtec AG, 4153 Reinach (CH)
(72) Erfinder: KÜNG, Thomas, 4142 Münchenstein (CH); SCHRANER, Fabio, 4055 Basel (CH); VOGLGSANG, Dominik, 79589 Binzen (DE)
(74) Vertreter: Andres, Angelika Maria
(86) Internationale Anmeldenummer: PCT/EP2018/076283
(87) Internationale Veröffentlichungsnummer: WO 2019/076604

(56) Entgegenhaltungen:
- WO-A1-2007/006436
- WO-A1-2007/048742
- DE-A1- 4 117 287
- DE-A1-102008 016 235
- DE-A1-102008 016 296
- DE-A1-102013 100 702
- US-A- 4 206 788

## Beschreibung

Die vorliegende Erfindung betrifft ein Verfahren und eine Vorrichtung zur Durchführung eines Abfüllprozesses.

Für die Abfüllindustrie werden bisher Durchflussmessgeräte der Anmelderin unter dem Namen "Dosimag" und "Dosimass" angeboten. Diese Geräte besitzen die Funktion "integriertes Batching", welche im Stande ist, Abfüllungen selbst zu tätigen. Das heißt, Abfüllventile können direkt vom Durchflussmessgerät angesteuert, sowie die Nachlaufmengen automatisch korrigiert werden. Eine solche Vorrichtung ist in WO 2007/048742 A1 offenbart.

Das Steuern von Abfüllungen nach den bisherigen Verfahren kann allerdings von verschiedenen Faktoren negativ beeinflusst werden, insbesondere durch sehr kurze Abfüllzeiten und Störungen vom Medium auf das Messprinzip z.B. durch Druckschwankungen und/oder Temperaturschwankungen.

Ausgehend vom vorgenannten Stand der Technik, besteht die Aufgabe der vorliegenden Erfindung darin ein verbessertes Verfahren zur Steuerung des Abfüllprozesses bereitzustellen.

Die vorliegende Erfindung löst diese Aufgabe durch ein Verfahren mit den Merkmalen des Anspruchs 1 und durch eine Vorrichtung mit den Merkmalen des Anspruchs 10.

Ein erfindungsgemäßes Verfahren zur zeitgesteuerten Durchführung eines Abfüllprozesses, weist die folgenden Schritte auf:
Schritt A: Beginn einer ersten Durchflussmessung vor oder während des Starts einer Abfüllung eines ersten Behältnisses;
Schritt B: Start der Abfüllung des ersten Behältnisses zu einem ersten Zeitpunkt to;
Schritt C: Ende der Abfüllung des ersten Behältnisses zu einem zweiten Zeitpunkt t_{E} wobei der zweite Zeitpunkt t_{E} durch ein eingestelltes erstes Zeitintervall vorgegeben wird, wobei das erste Zeitintervall der Abfüllung maximal 1s beträgt;
Schritt D: eine ein- oder vorzugsweise mehrfache Wiederholung der Schritte B und C für die Abfüllung eines zweiten oder mehrerer weiterer Behältnisse;
Schritt E: Ende der ersten Durchflussmessung unter Ermittlung eines Gesamtdurchflusses der vorangegangenen Abfüllungen;
Schritt F: Vergleich eines aus dem Gesamtdurchfluss ermittelten Ist-Wertes mit einem vorgegebenen Sollwert und
Schritt G: Anpassung des ersten Zeitintervalls anhand des Vergleichs gemäß Schritt F.

Das erfindungsgemäße Verfahren ermöglicht die Realisierung von sehr kurzen Abfüllzeiten. Das erfindungsgemäße Verfahren ermöglicht anders als eine reine Zeitsteuerung zudem einen Ausgleich weiterer Störfaktoren, beispielsweise Druck- oder Temperaturschwankungen.

Vorteilhafte Ausgestaltungen der Erfindung sind Gegenstand der Unteransprüche.

Das Verfahren weist zumindest fünf, vorzugsweise zumindest zehn, besonders bevorzugt 10 bis 100 Wiederholungen der Schritte B und C zur Befüllung auf. Dabei werden zumindest fünf, vorzugsweise zumindest zehn, besonders bevorzugt 10 bis 100 Behältnisse befüllt, welche besonders bevorzugt das gleiche Volumen aufweisen, wie das erste Behältnis.

Die Abfüllvolumina der jeweiligen Einzelabfüllungen der Behältnisse, welche durch die Durchflussmessungen ermittelt werden, werden zu dem Gesamtvolumen addiert.

Das Zeitintervall der Abfüllung in Schritt B beträgt bevorzugt zumindest 10 ms (Millisekunden).

Das Zeitintervall der Abfüllung in Schritt B kann vorteilhaft maximal 1 s (Sekunde), vorzugsweise weniger als 550 ms (Millisekunden), besonders bevorzugt weniger als 250 ms (Millisekunden), betragen.

Der Zeitraum zur Ermittlung des Gesamtdurchflusses kann vorteilhaft zumindest 9 s (Sekunden), vorzugsweise 10 s bis 5 min (Minuten), betragen.

Die Abfüllung der Behältnisse erfolgt bevorzugt ohne besondere Nachlaufmengenregelung. Oftmals wird zur Befüllung der Behältnisse das Nachlaufverhalten des Abfüllventils berücksichtigt, welches bei einer durchflussgesteuerten Abfüllung eine besondere Herausforderung darstellt. Die übliche durchflussgesteuerte Abfüllung ist die direkte Stellgröße die integrierte Durchflussmenge, bei der das Schliessen des Füllventils initiiert wird. Bei der zeitgesteuerte Abfüllung erfolgt die Regelung durch Einstellung des Zeitintervalls für die Abfüllung.

Es ist von Vorteil, wenn die Schritte B-G in einem ersten Betriebsmodus ausgeführt werden und wenn ein zweiter Betriebsmodus vorgesehen ist bzw. das Verfahren einen zweiten Betriebsmodus aufweist, in welchem der Abschaltzeitpunkt der Abfüllung anhand einer aktuellen Volumen- und/oder Massedurchflussmessung zur Befüllung eines Behältnisses erfolgt, wobei der zweite Betriebsmodus als Hauptbetriebsmodus betrieben wird und in den ersten Betriebsmodus umgeschalten wird, sofern der erste Betriebsmodus außerhalb eines Toleranzbereichs arbeitet.

Ein solches Umschalten kann beispielsweise bei einer Störung in der Messung (Messspitzen) erfolgen. Typischerweise entspricht der zweite Betriebsmodus dem bisher üblichem Vorgehen bei einer Abfüllung und der zweite Betriebsmodus wird bei Irregularitäten zugeschaltet.

Der Vergleich gemäß Schritt F kann durch einen Vergleich der Messung einer ermittelten durchschnittlichen Abfüllmenge für eine Einzelabfüllung als Mess-Wert mit dem vorgegebenen Sollwert erfolgen. Der Ist-Wert kann aus dem Gesamtdurchflusses einer Mehrzahl an unmittelbar vorhergehenden Abfüllungen ermittelt werden.

Der Vergleich gemäß Schritt F kann durch einen gleitenden Mittelwertfilter erfolgen.

Zudem kann der Mittelwertfilter durch einen Medianfilter ergänzt werden, also einen Filter für stark abweichende Werte, sogenannte Ausreißer. Der Medianfilter und/oder der Mittelwertfilter sind bevorzugt vom Nutzer parametrierbar. Dem Mittelwertfilter ist der Medianfilter vorzugsweise vorgelagert.

Weiterhin erfindungsgemäß ist eine Vorrichtung umfassend einen Regelkreis zur zeitgesteuerten Abfüllmengenregelung und ein Durchflussmessgerät , insbesondere zur Durchführung des Verfahrens nach einem der vorhergehenden Ansprüche.

Der Regelkreis kann dabei zumindest teilweise im Durchflussmessgerät integriert sein. Die Vorrichtung weist einen Regler und eine Regelstrecke auf. Dabei ist insbesondere zumindest der Regler vorteilhaft im Durchflussmessgerät integriert

Durch Integrierung des Reglers in das Durchflussmessgerät kann die zeitgesteuerte Abfüllmengenregelung mit geringem apparativem Aufwand in ein bestehendes System integriert werden.

Der Regler kann ein erstes PT₁-Glied zum Vergleich eines Sollwertes mit einem Ist-Wert aufweisen. Der Ist-Wert kann aus einem aus mehreren zeitgesteuerten abfüllmengengeregelten Abfüllungen gemessenen Gesamtdurchflusses ermittelt werden.

Der Regler kann ein zweites PT₁-Glied zur Ermittlung einer zur Einzelabfüllung benötigten Zeit aufweisen.

Beiden vorgenannten PT₁-Gliedern kann jeweils ein Medianfilter vorgelagert sein.

Weiterhin kann die Regelstrecke eine Hydraulik, insbesondere eine Pumpe und einen Vorlagenbehälter, aufweisen und eine Druck-Messvorrichtung aufweisen, zur Druckregelung im Vorlagebehälter.

Das Durchflussmessgerät kann vorteilhaft als Coriolis-Durchflussmessgerät ausgebildet sein. Alternativ ist auch ein magnetisch-induktives Durchflussmessgerät vorteilhaft denkbar. Das Coriolis-Durchflussmessgerät hat allerdings eine höhere Sampling-Rate und höhere Genauigkeit für eine schnellere Abfüllung.

Nachfolgend wird die Erfindung anhand eines Ausführungsbeispiels und mit Hilfe der beiliegenden Figuren näher erläutert. Das Ausführungsbeispiel ist in keinster Weise beschränkend für den Gegenstand der Erfindung zu verstehen. Insbesondere sind auch mehrere Einzelmerkmale der nachfolgend Ausführungsvariante im Kontext der vorliegenden Erfindung auch gesondert und losgelöst vom Ausführungsbeispiel zu verstehen. Es zeigen:
Fig. 1 schematische Darstellung eines Regelkreises für eine zeitgesteuerte Abfüllung; und
Fig. 2 Standardabweichung bei Abfüllversuchen.

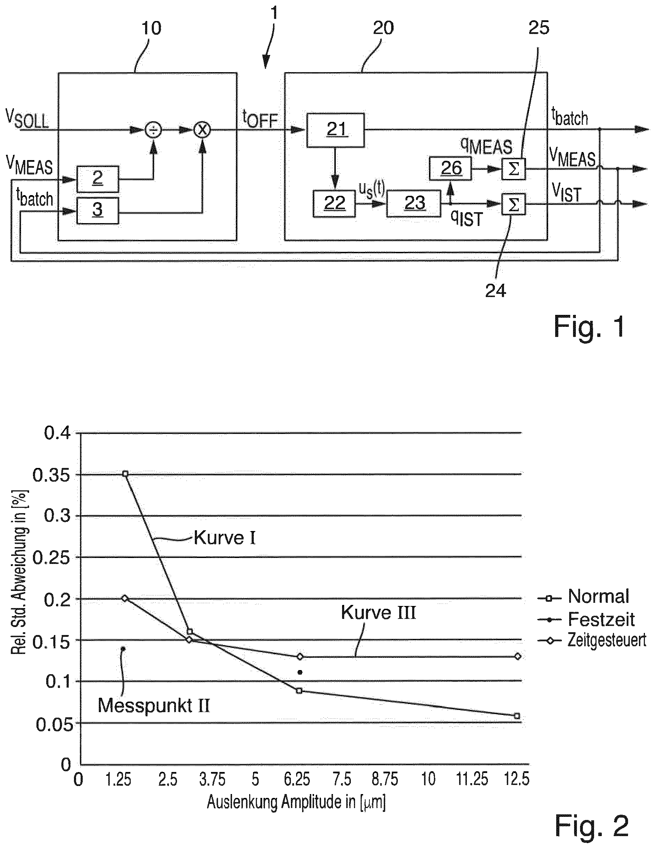

Der in Fig. 1 dargestellte Regelkreis dient einer zeitgesteuerten Abfüllung mit Abfüllmengenregelung bei Durchflussmessgeräten

Eine solche zeitgesteuerte Abfüllung kann bei schwierigen Abfüll-Anwendungen, beispielsweise bei Abfüllen von geringen Mengen mit entsprechend sehr kurzen Abfüllzeiten, eingesetzt werden, bei denen die herkömmlichen Messprinzipien an Ihre Grenzen stoßen. Weitere schwierige Abfüllanwendung zeichnen sich dadurch aus dass das Messsignal für die Durchflussmessung aufgrund von Prozessbedingungen gestört ist (z.B. durch Feststoffe, kleine Gasblasen).

Hier soll durch eine Zeitsteuerung des Abfüllvorgangs ein besseres Resultat erzielt werden.

Die zeitgesteuerte Abfüllung ist im vorliegenden Verfahren um eine Regelung der gemessenen Abfüllmenge erweitert.

Beim Zeitpunkt Null wird das Abfüllventil geöffnet und ein Zeitnehmer gestartet. Ist eine bestimmte Zeit vergangen, wird das Abfüllventil wieder geschlossen.

Während der Abfüllung erfolgt eine Durchflussmessung. Zur Regelung der Abfüllmenge verwendet das Verfahren die aus einer bestimmten Anzahl vergangener Abfüllungen gemittelte Menge und Zeit, beispielsweise die gemittelte Menge und Zeit von 10 Abfüllungen.

Dies erlaubt es, z.B. langsame Schwankungen des Mittelwerts der Abfüllmenge pro Einzelabfüll-Zeitintervall z.B. aufgrund langsamer Änderungen von Temperatur oder Druck auszugleichen. Durch die Regelung kann die Steuerung der sogenannten Nachlaufmenge entfallen, da diese in dem Mittelwert der Abfüllmenge bereits berücksichtigt ist.

Ein bevorzugter Regelkreis für die zeitgesteuerte Abfüllung ist in Fig. 1 dargestellt.

Der Regelkreis 1 weist einen Regler 10 und eine Regelstrecke 20 auf.

Der Eingangswert Vₛₒₗₗ des Regelkreises ist eine vorgegebene Abfüllmenge, also eine Masse oder ein Volumen.

Ein erstes als PT₁-Glied 2 ausgebildetes LZI-Übertragungsglied ermöglicht die Berücksichtigung einer durch das Durchflussmessgerät ermittelten Abfüllmenge V_{Meas} als Masse- oder Volumenwert, durch den Regler 10.

Ein zweites als PT₁-Glied 3 ausgebildetes LZI-Übertragungsglied ermöglicht die Berücksichtigung der Zeit, welche für einen Abfüllvorgang benötigt wird, durch den Regler 10.

Der Regler 10 ermittelt als Ausgabewert die für die Abfüllung benötigte Zeit t_{batch}.

Der Regler 10 übermittelt den Ausgabewert toff als eine für die Abfüllung vorgegebene Zeit an die Regelstrecke 20. Diese weist eine Abfüllungs-Zeitermittlung unter Berücksichtigung des Ausgabewerts und ggf. einer oder mehrerer weiterer Störgrößen SG auf. Die Störgrößen können durch Messung, Ermittlung oder durch manuelle Eingabe des Nutzers in die Regelstrecke eingeführt werden.

Ein Schaltausgang 22 übermittelt ein zeitabhängiges spannungsäquivalentes Signal us(t) an eine Hydraulik 23.

Durch die Hydraulik 23 wird ein effektiver Durchfluss qist an ein Messsystem 26 weitergegeben, welches einen gemessenen Durchfluss q_{Meas} als Masse- oder Volumenfluss ermittelt.

Aus dem effektiven Durchfluss ergibt sich in einem Gebinde 24 eine effektive Abfüllmenge V_{IST}.

Aus dem gemessenen Durchfluss kann durch eine Recheneinheit 25 eine gemessene Abfüllmenge V_{Meas}, sowie eine aus der vorgegebenen Zeit t_{Off} ermittelte neue für die Abfüllung benötigte Zeit t_{batch} ermittelt werden.

Um die Effektivität des Verfahrens darzustellen, wurden verschiedene Abfüllversuche mit einem Dosimass DN8 (3/8") der Firma Endress und Hauser unter Vorgabe des vorgenannten Regelkreises 1 auf einer Kalibrieranlage betrieben.

Es wurden zudem zwei weitere Varianten der Abfüllung mit der zeitgesteuerten Abfüllung verglichen:
a) eine herkömmliche Abfüllung mit der Durchflussmessung und Nachlaufmengenkorrektur.
b) eine Abfüllung mit einer fest eingestellten Zeit.
c) eine zeitgesteuerte Abfüllung mit Abfüllmengenkorrektur wie durch den

Regelkreis der Fig. 1 beschrieben wird.

Um Fälle zu provozieren, bei welchen die herkömmliche Durchflussmessung an ihre Grenzen stößt, wurde die Auslenkung der Coriolis Schwingamplitude des Dosimass verringert, um das Eigenrauschen zu erhöhen.

Dieses Eigenrauschen simuliert das Rauschen, welches bei kleinen Abfüllmengen die Reproduzierbarkeit der Abfüllmenge limitiert.

In der Fig. 2 sind die Resultate aus Abfüllversuchen dargestellt.

Bei den Abfüllversuchen wurden 1000 Abfüllungen pro Abfüllreihe durchgeführt. Die Soll-Menge betrug dabei 150 Gramm. Der Durchfluss betrug 100 Gramm pro Sekunde. Der Systemdruck der Abfüllanlage betrug 0,7 bar und die Auslenkung der Schwingamplitude wurde zwischen A/10 und A variiert.

Auf der Y-Achse ist die relative Standardabweichung der Abfüllungen einer Abfüllreihe und auf der X-Achse die Auslenkung der Coriolis Schwingamplitude des Coriolis-Durchflussmessgerätes abgebildet. Es ist festzustellen, dass bei der herkömmlichen Messung a) (Kurve I) die Standardabweichung mit dem relativen Eigenrauschen bezogen auf die Nutzsignalamplitude (abhängig von der Schwingamplitude) des Messgeräts zunimmt.

Bei der zeitgesteuerten Abfüllung c) mit Abfüllmengenregelung (Kurve III) ist ebenfalls eine Abhängigkeit vom Eigenrauschen zu erkennen. Dies rührt daher, dass die gemessenen Abfüllmengen dazu verwendet werden, die neue Abfüllzeit zu berechnen.

Die Abfüllung b) mit fester Zeit (Messpunkte II) im Versuch mit 1,5 Sekunden weist in diesen Versuchen bessere Ergebnisse als die zeitgesteuerte Abfüllung mit Abfüllmengenregelung (Kurve III) auf.

Bei langsamen Änderungen von Druckverhältnissen oder der Viskosität - z.B. aufgrund von Schwankungen in der Rezeptur des Produkts oder der Temperatur im Tages oder Jahresverlauf hat sich gezeigt, dass die Abfüllung mit fester Zeit aber zunehmend ungenauer funktioniert als die zeitgesteuerte Abfüllung mit Abfüllmengenregelung (Kurve III).

Für die zeitgesteuerte Abfüllung mit Abfüllmengenregelung (Kurve III) gilt bei Betrachtung eines relativ kurzen Zeitraums mit stabilen Prozessbedingungen dass sich durch eine Mittelung über eine größere Anzahl von Abfüllmengen, die Standardabweichung der zeitgesteuerten Abfüllung an die mit der fixen Abfüllzeit annähert.

Die zeitgesteuerte Abfüllung mit Abfüllmengenregelung bietet sich daher besonders bei reproduzierbaren Prozessen als eine besonders verlässliche Variante der Abfüllung an.

Im Fall mit dem höchsten relativen Eigenrauschen (Coriolis Schwingamplitude bei A/10) konnte durch die Zeitsteuerung Kurve II) eine Verbesserung um den Faktor 2 gegenüber der herkömmlichen Abfüllvariante (Kurve I) erzielt werden.

### Bezugszeichen

- 1: Regelkreis
- 2: PT₁-Glied mit Medianfilter
- 3: PT₁-Glied mit Medianfilter
- 10: Regler
- 20: Regelstrecke
- 21: Abfüllungs-Zeitermittlung
- 22: Schaltausgang
- 23: Hydraulik
- 24: Gebinde
- 25: Recheneinheit
- 26: Messsystem

- V_{Soll}: vorgegebene Abfüllmenge (Masse in [kg] oder Volumen in [I])
- V_{Meas}: gemessene Abfüllmenge (Masse in [kg] oder Volumen in [I])
- V_{Ist}: effektive Abfüllmenge (Masse in [kg] oder Volumen in [I])
- toff: für die Abfüllung vorgegebene Zeit in [s|
- q_{Meas}: gemessener Durchfluss (Masse- oder Volumendurchfluss in [kg/s] oder [l/s])
- q_{Ist}: effektiver Durchfluss (Masse- oder Volumendurchfluss in [kg/s] oder [l/s])
- us(t): Signal am Schaltausgang

## Patentansprüche

1. Verfahren zur zeitgesteuerten Durchführung eines Abfüllprozesses, mit den **folgenden Schritten**:
A Beginn einer ersten Durchflussmessung vor oder während des Starts einer Abfüllung eines ersten Behältnisses,
B Start der Abfüllung des ersten Behältnisses zu einem ersten Zeitpunkt (to);
C Ende der Abfüllung des ersten Behältnisses zu einem zweiten Zeitpunkt (t_{E}),
**wobei** der zweite Zeitpunkt (t_{E}) durch ein eingestelltes erstes Zeitintervall (toff) vorgegeben wird,
**wobei** das erste Zeitintervall (toff) der Abfüllung maximal 1 s beträgt;
D ein- oder mehrfache Wiederholung der Schritte B und C für die Abfüllung eines zweiten oder mehrerer weiterer Behältnisse;
E Ende der ersten Durchflussmessung unter Ermittlung eines Gesamtdurchflusses (q_{Meas}) der vorangegangenen Abfüllungen;
F Vergleich eines aus dem Gesamtdurchfluss (q_{Meas}) ermittelten Ist-Wertes mit einem vorgegebenen Sollwert und
G Anpassung des ersten Zeitintervalls (toff) anhand des Vergleichs gemäß Schritt F.

2. Verfahren nach Anspruch 1, **dadurch gekennzeichnet, dass** die zumindest fünf, vorzugsweise zumindest zehn, besonders bevorzugt 10 bis 100 Wiederholungen der Schritte B und C zur Befüllung von zumindest fünf, vorzugsweise zur Befüllung von zumindest zehn, besonders bevorzugt 10 bis 100 Behältnisse in Schritt D erfolgen, welche in die Ermittlung des Gesamtdurchflusses (q_{Meas}) eingehen.

3. Verfahren nach Anspruch 1 oder 2, **dadurch gekennzeichnet, dass** das Zeitintervall (toff) der Abfüllung in Schritt B zumindest 10 ms beträgt.

4. Verfahren nach einem der vorhergehenden Ansprüche, **dadurch gekennzeichnet, dass** der Zeitraum zur Ermittlung des Gesamtdurchflusses (q_{Meas}) zumindest 9 s, vorzugsweise 10 s bis 5 min, beträgt.

5. Verfahren nach einem der vorhergehenden Ansprüche, **dadurch gekennzeichnet, dass** die Abfüllung ohne Nachlaufmengenregelung erfolgt.

6. Verfahren nach einem der vorhergehenden Ansprüche, **dadurch gekennzeichnet, dass** der Vergleich gemäß Schritt F durch einen Vergleich der Messung Vmeas einer durchschnittlichen Abfüllmenge (V_{Ist}) als Mess-Wert für eine Einzelabfüllung, welche ermittelt ist aus dem Gesamtdurchfluss einer Mehrzahl an unmittelbar vorhergehenden Abfüllungen, mit dem vorgegebenen Sollwert (V_{Soll}) erfolgt.

7. Verfahren nach einem der vorhergehenden Ansprüche, **dadurch gekennzeichnet, dass** der Vergleich gemäß Schritt F durch einen gleitenden Mittelwertfilter erfolgt.

8. Verfahren nach dem vorhergehenden Anspruch, **dadurch gekennzeichnet, dass** dem Mittelwertfilter ein Medianfilter, vorzugsweise ein parametrierbarer Medianfilter, vorgelagert ist.

9. Verfahren nach einem der vorhergehenden Ansprüche, **dadurch gekennzeichnet, dass** die Schritte B-G in einem ersten Betriebsmodus ausgeführt werden und dass das Verfahren einen zweiten Betriebsmodus aufweist, in welchem der Abschaltzeitpunkt der Abfüllung anhand einer aktuellen Volumen- und/oder Massedurchflussmessung zur Befüllung eines Behältnisses erfolgt, wobei der zweite Betriebsmodus als Hauptbetriebsmodus betrieben wird und in den ersten Betriebsmodus umgeschalten wird, sofern der erste Betriebsmodus außerhalb eines Toleranzbereichs arbeitet.

10. Vorrichtung zur Durchführung eines Abfüllprozesses umfassend einen Regelkreis (1) zur zeitgesteuerten Abfüllmengenregelung und ein Durchflussmessgerät eingerichtet zur Durchführung des Verfahrens nach einem der vorhergehenden Ansprüche, wobei der Regelkreis (1) zumindest einen Regler (10) und eine Regelstrecke (20) aufweist und wobei zumindest der Regler (10) des Regelkreises (1) im Durchflussmessgerät integriert ist.

11. Vorrichtung nach dem vorhergehenden Anspruch, **dadurch gekennzeichnet, dass** der Regler (10) ein erstes PT₁-Glied (2) zum Vergleich eines Sollwertes mit einem Ist-Wert aufweist, welcher Ist-Wert aus einem aus mehreren zeitgesteuerten abfüllmengengeregelten Abfüllungen gemessenen Gesamtdurchflusses (q_{Meas}) ermittelt wurde.

12. Vorrichtung nach einem der vorhergehenden Ansprüche 10 bis 11, **dadurch gekennzeichnet, dass** der Regler (10) ein zweites PT₁-Glied (3) zur Ermittlung einer zur Einzelabfüllung benötigten Zeit (toff) aufweist.

13. Vorrichtung nach einem der vorhergehenden Ansprüche 10 oder 11, **dadurch gekennzeichnet, dass** die Regelstrecke (20) eine Hydraulik (23), insbesondere eine Pumpe und einen Vorlagenbehälter, und eine Druck-Messvorrichtung aufweist, zur Druckregelung im Vorlagebehälter.

14. Vorrichtung nach einem der vorhergehenden Ansprüche 10 bis 13, **dadurch gekennzeichnet, dass** die Vorrichtung zumindest ein Abfüllventil aufweist.

## Claims

1. Procedure for the time-controlled performance of a filling process comprising the following steps:
A Commencement of a first flow measurement before or during the start of a filling of a first vessel,
B Start of the filling of the first vessel at a first time (to),
C Completion of the filling of the first vessel at a second time (t_{E}),
wherein the second time (t_{E}) is predefined by a first set time interval (toff),
wherein the first time interval (toff) of the filling is at maximum 1 s,
D Repetition of Steps B and C once or several times to fill a second or several other vessels,
E Completion of the first flow measurement with the determination of a total flow (q_{Meas}) of the previous fillings,
F Comparison of an actual value determined from the total flow (q_{Meas}) with a predefined target value, and
G Adaptation of the first time interval (t_{Off}) on the basis of the comparison according to Step F.

2. Procedure as claimed in Claim 1, **characterized in that** the at least five, preferably at least ten, particularly preferably 10 to 100 repetitions of Steps B and C are performed to fill at least five, preferably to fill at least ten, particularly preferably 10 to 100 vessels in Step D, which are included in the determination of the total flow (q_{Meas}).

3. Procedure as claimed in Claim 1 or 2, **characterized in that** the time interval (toff) for the filling in Step B is at least 10 ms.

4. Procedure as claimed in one of the previous claims, **characterized in that** the period of time to determine the total flow (q_{Meas}) is at least 9 s, preferably 10 s to 5 min.

5. Procedure as claimed in one of the previous claims, **characterized in that** the filling is performed without drip quantity regulation.

6. Procedure as claimed in one of the previous claims, **characterized in that** the comparison according to Step F is performed by comparing the measurement Vmeas of an average filling quantity (V_{Ist}) as a measured value for an individual filling, wherein said value is determined from the total flow of multiple fillings performed immediately beforehand, with the predefined target value (V_{Soll}).

7. Procedure as claimed in one of the previous claims, **characterized in that** the comparison according to Step F is performed by a floating mean filter.

8. Procedure as claimed in the previous claim, **characterized in that** a median filter, preferably a parametrizable median filter, is located upstream from the mean filter.

9. Procedure as claimed in one of the previous claims, **characterized in that** Steps B to G are performed in a first operating mode and **in that** the procedure has a second operating mode in which the switch-off time of the filling is performed using a current volume flow and/or mass flow measurement to fill a vessel, wherein the second operating mode is run as the main operating mode and the system switches to the first operating mode if the first operating mode is working outside the tolerance range.

10. Apparatus for performing a filling process comprising a control circuit (1) for time-controlled batch quantity regulation and a flowmeter designed to perform the procedure as claimed in one of the previous claims, wherein the control circuit (1) has at least a controller (10) and a control system (20) and wherein at least the controller (10) of the control circuit (1) is integrated in the flowmeter.

11. Apparatus as claimed in the previous claim, **characterized in that** the controller (10) has a first PT₁ element (2) to compare a target value with an actual value, wherein said actual value has been determined from a total flow (q_{Meas}) measured from multiple fillings that are controlled by time and the fill quantity.

12. Apparatus as claimed in one of the previous Claims 10 to 11, **characterized in that** the controller (10) has a second PT₁ element (3) to determine a time (toff) needed for individual filling.

13. Apparatus as claimed in one of the previous Claims 10 or 11, **characterized in that** the control system (20) has a hydraulic system (23), particularly a pump and a feed tank, and has a pressure measuring device to regulate the pressure in the feed tank.

14. Apparatus as claimed in one of the previous Claims 10 to 13, **characterized in that** the apparatus comprises at least a filling valve.

## Revendications

1. Procédé destiné à l'exécution commandée dans le temps d'un process de remplissage, lequel procédé comprend les étapes suivantes :
A Début d'une première mesure de débit avant ou pendant le début du remplissage d'un premier récipient,
B Début du remplissage du premier récipient à un premier instant (to),
C Fin du remplissage du premier récipient à un deuxième instant (t_{E}),
le deuxième instant (t_{E}) étant prédéfini par un premier intervalle de temps (toff) réglé,
le premier intervalle de temps (t_{Off}) du remplissage étant au maximum de 1 s,
D Répétition une ou plusieurs fois des étapes B et C pour le remplissage d'un deuxième ou de plusieurs autres récipients,
E Fin de la première mesure de débit avec détermination d'un débit total (q_{Meas}) des remplissages précédents,
F Comparaison d'une valeur réelle déterminée à partir du débit total (q_{Meas}) avec une valeur de consigne prédéfinie et
G Adaptation du premier intervalle de temps (toff) sur la base de la comparaison selon l'étape F.

2. Procédé selon la revendication 1, **caractérisé en ce que** les au moins cinq, de préférence au moins dix, particulièrement de préférence de 10 à 100 répétitions des étapes B et C sont effectuées pour le remplissage d'au moins cinq, de préférence pour le remplissage d'au moins dix, particulièrement de préférence de 10 à 100 récipients à l'étape D, lesquels récipients entrent dans la détermination du débit total (q_{Meas}).

3. Procédé selon la revendication 1 ou 2, **caractérisé en ce que** l'intervalle de temps (t_{Off}) du remplissage à l'étape B est d'au moins 10 ms.

4. Procédé selon l'une des revendications précédentes, **caractérisé en ce que** la période de temps pour déterminer le débit total (q_{Meas}) est d'au moins 9 s, de préférence de 10 s à 5 min.

5. Procédé selon l'une des revendications précédentes, **caractérisé en ce que** le remplissage s'effectue sans régulation de la quantité résiduelle.

6. Procédé selon l'une des revendications précédentes, **caractérisé en ce que** la comparaison selon l'étape F est effectuée par une comparaison de la mesure Vmeas d'une quantité de remplissage moyenne (V_{Ist}) en tant que valeur de mesure pour un remplissage individuel, laquelle valeur est déterminée à partir du débit total d'une pluralité de remplissages immédiatement précédents, avec la valeur de consigne prédéfinie (V_{Soll}).

7. Procédé selon l'une des revendications précédentes, **caractérisé en ce que** la comparaison selon l'étape F est effectuée par un filtre à moyenne mobile.

8. Procédé selon l'une des revendications précédentes, **caractérisé en ce qu'**un filtre médian, de préférence un filtre médian paramétrable, est placé en amont du filtre de valeur moyenne.

9. Procédé selon l'une des revendications précédentes, **caractérisé en ce que** les étapes B à G sont exécutées dans un premier mode de fonctionnement et **en ce que** le procédé présente un deuxième mode de fonctionnement dans lequel l'instant d'arrêt du remplissage est effectué à l'aide d'une mesure actuelle de débit volumique et/ou massique pour le remplissage d'un récipient, le deuxième mode de fonctionnement étant exploité comme mode de fonctionnement principal et étant commuté dans le premier mode de fonctionnement dans la mesure où le premier mode de fonctionnement fonctionne en dehors d'une plage de tolérance.

10. Dispositif destiné à la réalisation d'un process de remplissage comprenant un circuit de régulation (1) destiné à la régulation de la quantité de remplissage en fonction du temps et un débitmètre conçu pour la mise en œuvre du procédé selon l'une des revendications précédentes, le circuit de régulation (1) présentant au moins un régulateur (10) et un trajet de régulation (20) et au moins le régulateur (10) du circuit de régulation (1) étant intégré dans le débitmètre.

11. Dispositif selon la revendication précédente, **caractérisé en ce que** le régulateur (10) comporte un premier élément PT₁ (2) pour comparer une valeur de consigne à une valeur réelle, laquelle valeur réelle a été déterminée à partir d'un débit total (q_{Meas}) mesuré à partir de plusieurs remplissages commandés par le temps.

12. Dispositif selon l'une des revendications précédentes 10 à 11, **caractérisé en ce que** le régulateur (10) comporte un deuxième élément PT₁ (3) pour déterminer un temps (toff) nécessaire au remplissage individuel.

13. Dispositif selon l'une des revendications précédentes 10 ou 11, **caractérisé en ce que** le système de régulation (20) comporte un système hydraulique (23), notamment une pompe et un réservoir d'alimentation, ainsi qu'un dispositif de mesure de pression destiné à la régulation de la pression dans le réservoir d'alimentation.

14. Dispositif selon l'une des revendications précédentes 10 à 13, **caractérisé en ce que** le dispositif comprend au moins une vanne de remplissage.
